**Europäisches Patentamt**

**European Patent Office**

**Office européen des brevets**

(11) Publication number: **0 007 981**
A1

# EUROPEAN PATENT APPLICATION

(21) Application number: **79101664.5**

(22) Date of filing: **30.05.79**

(51) Int. Cl.³: **B 60 B 7/00,** B 60 C 19/12

(30) Priority: **14.08.78 US 933394**

(43) Date of publication of application: **20.02.80**
**Bulletin 80/4**

(84) Designated Contracting States: **FR GB IT**

(71) Applicant: **Caterpillar Tractor Co., 100 N. E. Adams Street, Peoria, Illinois 61629 (US)**

(72) Inventor: **Dadds, Floyd Sherman, 1816 West Lamont Avenue, Peoria Illinois 61614 (US)**
Inventor: **Reeves, Larry Roger, R.R. 2, Metamora Illinois 61548 (US)**

(74) Representative: **Wagner, Karl H., P.O. Box 246 Gewuerzmuehlstrasse 5, D-8000 München 22 (DE)**

(54) **Sidewall protector for a tire.**

(57) A resilient sidewall protector (11) is connected to a rim (13) for protecting a sidewall (18) of a tire (16) mounted on the rim (13) from cuts and bruises. The protector (11) extends from its connection to the rim (13) radially outwardly along the sidewall (18) and has an intermediate portion (34) shaped to receive the bulge (21) in the sidewall (18) of the tire (16) at the footprint area. The outer peripheral portion (33) of the protector (11) is resiliently urged into continuous engagement with the sidewall (18) in response to the protector (11) being connected to the rim (13).

## SIDEWALL PROTECTOR FOR A TIRE

### Technical Field

This invention relates to a sidewall protector for use in protecting the sidewall of a tire.

### Background Art

One example of a sidewall protector for tires is disclosed in an article entitled "Sidewall Protectors Available For Beadless Tires" of a service magazine published August 29, 1977, by Caterpillar Tractor Co. Another example of a sidewall protector is disclosed in U.S. Patent 4,030,530, which issued on June 21, 1977 to Walter W. Curtiss, Jr.

### Disclosure of Invention

In one aspect of the present invention, a sidewall protector assembly has an annular sidewall protector and means for connecting the annular sidewall protector to a rim of a wheel which has a pneumatic tire mounted thereon. A sidewall of the tire extends generally radially inwardly from a tread area and has a laterally projecting bulge at the footprint area of the tread in response to a load being placed on the tire. The annular sidewall protector has an inner peripheral portion, an outer peripheral portion, and an intermediate portion positioned radially between said inner and outer portions. The intermediate portion is shaped to receive the bulge in the sidewall at the footprint area of the tire. The inner peripheral portion is connectable to said rim by said connecting means and is of a construction sufficient for resiliently urging said outer peripheral portion into continuous engagement with the sidewall of the tire at the tread area thereof in response to being connected to said rim.

The sidewalls of tires are vulnerable to punctures from sharp rocks and other jagged material which the tire is likely to encounter as it rolls over the rough terrain on which off-the-road type vehicles are designed to operate. A puncture in a tire of a large off-the-road type vehicle could cause the vehicle to lose many hours of production while the tire is being repaired. Moreover, such large off-the-road tires are very expensive and it is a major expenditure to replace a tire damaged beyond repair.

By connecting the sidewall protector of the present invention to the rim, it extends radially outwardly along the sidewall of the tire with its outer peripheral portion being resiliently urged into continuous engagement with the sidewall at the tread area. The laterally extending bulge in the intermediate portion of the sidewall protector receives and envelopes the bulge in the tire so that the portion of the sidewall most vulnerable to damage, i.e., the underneath side of the bulge at the footprint area of the tread, is shielded by the sidewall protector. Thus, the sidewall protector absorbs the cuts and bruises which would otherwise be inflicted upon the tire and thereby extends the life of the tire. Further, a severely damaged sidewall protector can be quickly replaced with very little loss of productivity of the vehicle.

Brief Description of the Drawings

Fig. 1 is a diagrammatic side elevational view of an embodiment of the present invention.

Fig. 2 is a cross sectional view taken along line II-II of Fig. 1.

Fig. 3 is a cross sectional view taken along line III-III of Fig. 1.

Best Mode for Carrying out the Invention

Referring now to the drawings, a sidewall protector assembly is generally indicated by the reference numeral 10 and includes an annular sidewall protector 11 and a means 12 for connecting the sidewall protector to a rim 13. The rim has a pair of annular lips 14, one at each lateral side thereof to which the means 12 is connected.

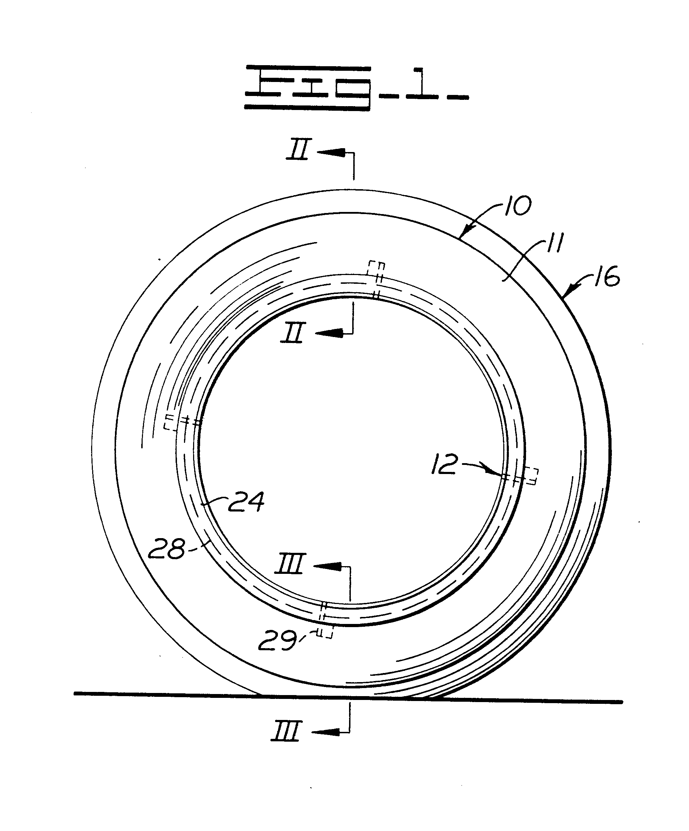

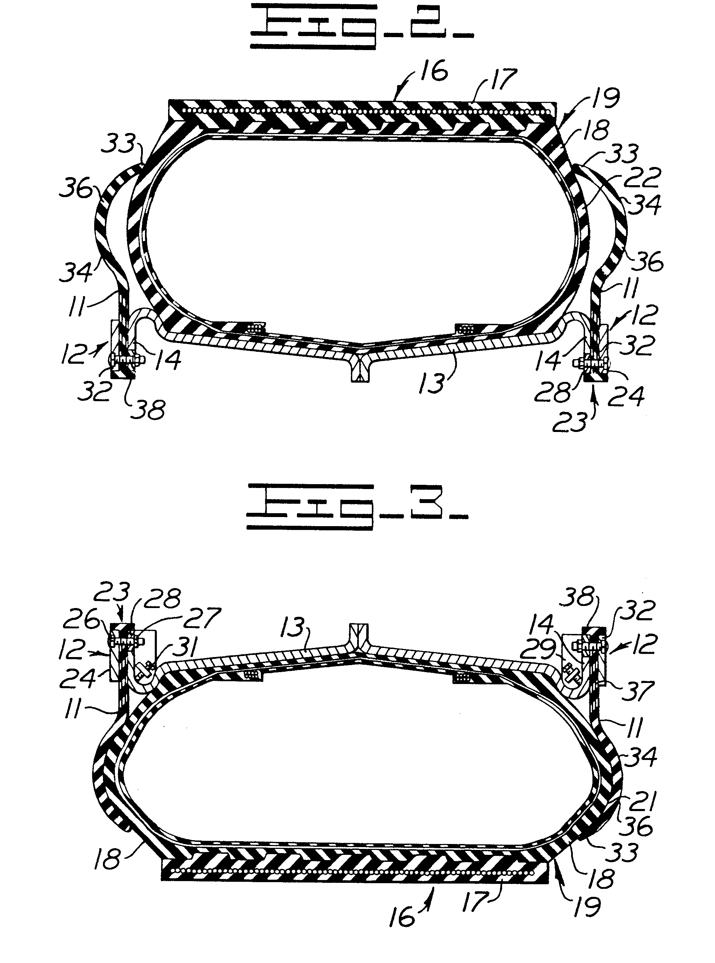

A pneumatic tire 16 is mounted on the rim. The tire illustrated is a tube tire having a tread belt 17 mounted on the outer circumferential surface and a sidewall 18 extending generally radially inwardly from a tread area 19 of the tire. As one skilled in the art is aware, the sidewall of a loaded tire flexes such that the shape of the sidewall changes at the footprint area of the tread as the tire rotates, this change in shape being evident by comparison of Figs. 2 and 3. Referring to Fig. 3, the sidewall has a laterally projecting bulge 21 at the footprint area of the tread in response to the tire supporting its rated load capacity, for example, such as when the tire is supporting a loaded vehicle. The remaining area of the sidewall has a normal shape or profile 22 as illustrated in Fig. 2.

The connecting means 12 can be, for example, an inner ring assembly 23, an outer ring 24, and a plurality of bolts and nuts 26 and 27. The inner ring assembly includes an inner ring 28 made up of arcuate segments which fit together against lip 14 and serve as an extension thereof. A plurality of blocks 29 are secured to the inner ring and extend radially inwardly inside the lip. The sidewall protector 11 is sandwiched between the inner and outer rings and is tightly clamped therebetween by the bolts and nuts 26,27. The bolts extend through aligned holes in outer ring 24, protector 11, and inner ring 28. An additional clamping force is exerted by a set screw 31 which is screw threaded through a plate secured to the block 29 and bears against the lip 14 of rim 13.

The annular sidewall protector 11 is preferably made from a molded elastomer, such as rubber or the like, and has a substantially flat inner peripheral portion 32, an outer peripheral portion 33 positioned remote from and at one side of a plane in which the inner portion 32 lies, and an intermediate portion 34 positioned intermediate the inner and outer peripheral portions. The intermediate portion 34 has a relatively stiff preformed bulge 36 which protrudes laterally outwardly in a direction away from the opposite side of the plane and is shaped to substantially match the shape of the bulge 21 in the sidewall 18 at the footprint area of tire 16. The inner peripheral portion 32 is connected to rim 13 by connecting means 12. The outer peripheral portion 33 extends at an angle laterally inwardly and radially outwardly toward the sidewall 18. The sidewall protector 11 and preferably inner peripheral portion 32 is of a construction sufficient for resiliently urging the entire circumference of the outer peripheral portion into continuous engagement with the sidewall of the tire in response to the inner peripheral portion being connected to the rim. The bulge 36 in intermediate portion 34 is preferably located at a position sufficient for receiving and enveloping the bulge 21 in the sidewall at the footprint area so that the outer peripheral portion 33 remains in contact with the sidewall at the tread area thereof. The intermediate portion remains free from contact with the remaining area of the sidewall thereby minimizing any rubbing action between the intermediate portion and the sidewall. For additional stiffness in urging the outer peripheral portion against the sidewall, a fabric reinforcing or other material illustrated at 37 can be integrally formed within the inner peripheral portion 32.

A lip 38 can be integrally formed on the inner peripheral edge of the inner peripheral portion 32 to aid in retaining the inner peripheral portion between the inner and outer rings 28,24.

## Industrial Applicability

The sidewall protector 11 of the present invention is particularly suited for the larger tires of off-the-road type vehicles such as large earthmoving vehicles. The outer peripheral portion 33 is continuously urged into engagement with sidewall 18 of the tire 16 at tread area 19 so that the bulge 36 in the intermediate portion 34 always envelopes the bulge 21 in the sidewall at the tread area as the tire rotates.

Other aspects, objects and advantages of this invention can be obtained from a study of the drawings, the disclosure and the appended claims.

- 1 -                                                    0007981

WHAT IS CLAIMED IS:

1.    In a sidewall protector assembly (10) having an annular sidewall protector (11) and means (12) for connecting the annular sidewall protector (11) to a rim (13) which has a pneumatic tire (16) mounted thereon, said tire (16) having a sidewall (18) extending generally radially inwardly from a tread area (19), said sidewall (18) having a laterally projecting bulge (21) at the footprint area of the tread in response to a load being placed on the tire (16) and a different arcuate shape (22) at the remaining area of the sidewall, the improvement comprising:

said annular sidewall protector (11) having an inner peripheral portion (32), an outer peripheral portion (33), and an intermediate portion (34) positioned radially between said inner and outer portions, said intermediate portion (34) being shaped sufficiently for receiving the bulge (21) in the sidewall (18) at the footprint area of the tire (16), said inner peripheral portion (34) being connectable to said rim (13) by said connecting means (12) and being of a constructon sufficient for resiliently urging said outer peripheral portion (33) into continuous engagement with the sidewall (18) of the tire (16) at the tread area (19) thereof in response to being connected to said rim (13).

2.    The sidewall protector assembly of claim 1 wherein said intermediate portion (34) is free from contact with said sidewall (18) at said remaining area of said sidewall (18).

3.    The sidewall protector assembly of claim 2 wherein said annular sidewall protector (11) is composed of a resilient elastomer.

4.    The sidewall protector assembly of claim 3 wherein said inner peripheral portion (32) has a reinforcing fabric (37) imbedded therein.

- 2 -                    0007981

5.   A sidewall protector assembly (10) for protecting a sidewall (18) of a tire (16) mounted on a rim (13), said sidewall (18) extending generally radially inwardly from a tread area (19) and has a laterally projecting bulge (21) at the footprint area of the tread in response to a load being placed on the tire and a different arcuate shape (22) at the remaining area of the sidewall (18), comprising:

an annular sidewall protector (11) having an inner peripheral portion (32), an outer peripheral portion (33), and an intermediate portion (34) positioned radially between said inner and outer peripheral portions, said intermediate portion (34) having a relatively stiff laterally projecting bulge (36) substantially matching the bulge (21) in the sidewall (18) at the footprint area of the tire (16);

means (11) for connecting the inner peripheral portion (32) to said rim (13); and

said inner peripheral portion (32) being of a construction sufficient for resiliently urging said outer peripheral portion (33) into continuous engagement with the sidewall (18) of the tire (16) at the tread area (19) thereof in response to being connected to said rim (13).

6.   The sidewall protector assembly of claim 5 wherein said intermediate portion (34) is free from contact with said sidewall (18) at said remaining area of said sidewall (18).

7.   A tire sidewall protector (11) comprising:

an annular ring of molded elastomer having a substantially flat inner peripheral portion (32), an outer peripheral sidewall engaging portion (33) positioned remote from and at one side of a plane in which the inner portion lies, and an intermediate portion (34) positioned radially between said inner and outer portions, said intermediate portion having a laterally projecting bulge (36) protruding in a direction away from the opposite side of said plane.

**Fig-1-**

2/2

**Fig_2_**

**Fig_3_**

| Category | Citation of document with indication, where appropriate, of relevant passages | Relevant to claim |
|---|---|---|
| X | FR - A - 1 172 247 (FILLOD)<br>* Page 1, left-hand column, line 1 - right-hand column, line 35; figures 1-4a * | 1-3,6 |
| X | GB - A - 511 056 (LAMBERT)<br>* Page 3, lines 38-105; figures 2,5 * | 1,2,5,6 |
| X | US - A - 1 905 674 (BABBS)<br>* Page 1, lines 53-90; figures 2,3 * | 1,3,7 |
| X | GB - A - 344 583 (BABBS)<br>* Page 2, lines 7-64; figures 1-4 * | 1-4,7 |
| X | FR - A - 539 785 (PERRAUD)<br>* Page 1, lines 51-56; figure 1 * | 1 |
| X | DE - B - 1 062 048 (SCHOEPF)<br>* Column 1, lines 37-48; figure 1 * | 1 |
| A | GB - A - 115/A.D.1914 (BRUNSWICK)<br>* Page 2, lines 15-28; figure 2 * | 1 |

./.

**DOCUMENTS CONSIDERED TO BE RELEVANT**

**CLASSIFICATION OF THE APPLICATION (Int. Cl. ³)**

B 60 B 7/00
B 60 C 19/12

**TECHNICAL FIELDS SEARCHED (Int.Cl. ³)**

B 60 B
B 60 C

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 16-11-1979 | AYITER |

EPO Form 1503.1 06.78

| Category | Citation of document with indication, where appropriate, of relevant passages | Relevant to claim | CLASSIFICATION OF THE APPLICATION (Int. Cl. 3) |
|---|---|---|---|
| A | <u>US - A - 2 488 864</u> (HANDY)<br>* Column 3, line 64 - column 5, line 69; figures 1-4 * | 1 | |
| A | <u>FR - A - 450 914</u> (PARIS)<br>* Page 1, lines 1-41; figures 1-4 * | 1,3,4,7 | |
| A | <u>US - A - 3 083 062</u> (KWOLEK)<br>* Column 2, line 37 - column 3, line 39; figures 2,4 * | 1,3,6 | TECHNICAL FIELDS SEARCHED (Int. Cl. 3) |
| A | <u>GB - A - 796 002</u> (GOODYEAR)<br>* Page 1, line 64 - page 2, line 16; figures 3-6 * | 1,7 | |
| A | <u>FR - A - 1 332 055</u> (BOUCHERON)<br>* Page 1, left-hand column, line 7 - right-hand column, line 33; figure 1 * | 1,3,4,5 | |
| A | <u>FR - A - 588 687</u> (LAGGIARD)<br>* Page 1, lines 19-20; figures 1,4,5,6 * | 1,7 | |

**DOCUMENTS CONSIDERED TO BE RELEVANT**

EPO Form 1503.2  06.78